# EUROPÄISCHE PATENTSCHRIFT

(11) **EP 4 449 848 B1**
(45) Veröffentlichungstag und Bekanntmachung des Hinweises auf die Patenterteilung: **28.01.2026**
(21) Anmeldenummer: 24157290.8
(22) Anmeldetag: 13.02.2024
(51) Int. Cl.: A01D 41/127, A01B 79/00

(54) **SELBSTFAHRENDE LANDWIRTSCHAFTLICHE ERNTEMASCHINE**
SELF-PROPELLED AGRICULTURAL HARVESTER
MOISSONNEUSE AGRICOLE AUTOMOTRICE

(30) Priorität: 20.04.2023 DE 102023110114
(43) Veröffentlichungstag der Anmeldung: 23.10.2024
(73) Patentinhaber: CLAAS Selbstfahrende Erntemaschinen GmbH, 33428 Harsewinkel (DE)
(72) Erfinder: Holtkötter, Niklas, 59427 Unna (DE); Geiger, Jan, 23898 Labenz (DE); Dierkes, Christoph, 49479 Ibbenbüren (DE)
(74) Vertreter: CLAAS Gruppe

(56) Entgegenhaltungen:
- AU-A1- 2015 202 751
- JP-B2- 3 618 242
- US-A1- 2021 176 911
- US-A1- 2021 289 702
- US-B1- 7 264 063

## Beschreibung

Die vorliegende Erfindung betrifft eine selbstfahrende landwirtschaftliche Erntemaschine gemäß dem Oberbegriff des Anspruches 1.

Eine selbstfahrende landwirtschaftliche Erntemaschine, insbesondere ein Feldhäcksler oder ein Mähdrescher, weist ein Vorsatzgerät zur Aufnahme von Erntegut von einem Feld, wenigstens ein Arbeitsorgan zur Bearbeitung und/oder Förderung des Ernteguts, einen hydrostatischen Fahrantrieb als Funktionseinrichtungen auf. Ein Hydrauliksystem der Erntemaschine dient zur Versorgung der Funktionseinrichtungen mit einem Druckmittel. Die Erntemaschine kann eine Steuerungseinrichtung umfassen, die dazu eingerichtet ist, die Funktionseinrichtungen der Erntemaschine gemäß zumindest einer in einer Speichereinheit der Steuerungseinrichtung hinterlegten Sequenzmanagementfunktion anzusteuern.

Beispielhaft hierfür ist ein aus der DE 10 2017 106 636 A1 bekannter selbstfahrender Feldhäcksler. Beschrieben ist ein Verfahren, wonach eine automatische Reduzierung der durch einen Antriebsmotor bereitgestellten Antriebsdrehzahl durch das Auslösen eines den Betrieb der Erntemaschine beeinflussenden Ereignisses eingeleitet wird. Ein den Betrieb der Erntemaschine beeinflussendes Ereignis ist der Wechsel eines Betriebsmodus von "Straßenfahrt" in "Feldfahrt" durch die Betätigung eines Schaltelementes, des sogenannten Straßenfahrsachalters.

Die DE 103 48 090 A1 offenbart eine selbstfahrende landwirtschaftliche Erntemaschine, wie einen Mähdrescher oder einen Feldhäcksler, welche eine Steuerung und eine Bedienereingabeeinrichtung umfasst. Die Steuerung ist betreibbar, in Verbindung mit einer Bedienereingabeeinrichtung einen Übergang von einer Arbeits- in eine Straßenbetriebsart zu erkennen und in Abhängigkeit davon automatisch ein Arbeitsorgan, wie das Vorsatzgerät und eine Überladevorrichtung, selbsttätig in eine Außerbetriebsposition zu verbringen.

In der EP 2 020 170 B1 wird ein Verfahren zur Steuerung eines Mähdreschers beschrieben, gemäß dem eine Reihe von automatisch auszuführenden Sequenzen zur Ansteuerung von Arbeitsorganen des Mähdreschers vorgesehen sind, wenn der Mähdrescher eine festzulegende Grenze eines Arbeitsbereiches quert oder sich der Grenze nähert, wobei eine kritische Distanz unterschritten wird, wobei jede Sequenz einer entsprechenden Auslösezeit oder einer Auslöseposition bezogen auf das Erreichen der Grenze zugeordnet ist, indem eine Ablaufsteuerung in Abhängigkeit von der aktuellen Fahrgeschwindigkeit automatisiert anpasst wird. US2021289702A1 offenbart eine selbstfahrende Erntemaschine mit einem Steuersystem, das das Umschalten zwischen Straßen- und Feldmodus automatisiert. Seine Sequenzmanagementfunktion, einschließlich der Modi "Feldstart" und "Feldende", steuert den Hydraulikdruck und -durchfluss basierend auf der Geschwindigkeit und der Verfügbarkeit von Flüssigkeit. AU2015202751A1, US7264063B1, US2021176911A1 und JP3618242B2 diskutieren Systeme zur Überwachung der Betriebsmodi von Erntemaschinen, einschließlich der Erkennung unterschiedlicher hydraulischer Drücke und der Automatisierung von Erntemaschinenfunktionen basierend auf dieser Erkennung.

Ausgehend vom vorstehend genannten Stand der Technik soll eine selbstfahrende landwirtschaftliche Erntemaschine der eingangs genannten Art weitergebildet werden, welche sich durch eine verbesserte Abstimmung bei der Ansteuerung von Funktionseinrichtungen mittels einer Sequenzmanagementfunktion auszeichnet.

Diese Aufgabe wird erfindungsgemäß durch eine selbstfahrende landwirtschaftliche Erntemaschine mit den Merkmalen des Anspruches 1 gelöst. Vorteilhafte Weiterbildungen sind Gegenstand der abhängigen Ansprüche 2 bis 15.

Gemäß dem Anspruch 1 wird eine selbstfahrende landwirtschaftliche Erntemaschine, insbesondere ein Feldhäcksler, vorgeschlagen, mit einem Vorsatzgerät zur Aufnahme von Erntegut von einem Feld, wenigstens einem Arbeitsorgan zur Bearbeitung und/oder Förderung des Ernteguts sowie einem hydrostatischen Fahrantrieb als Funktionseinrichtungen, einem Hydrauliksystem zur Versorgung zumindest einiger der Funktionseinrichtungen mit einem Druckmittel, sowie einer Steuerungseinrichtung, die dazu eingerichtet ist, die Funktionseinrichtungen der Erntemaschine gemäß zumindest einer in einer Speichereinheit der Steuerungseinrichtung hinterlegten Sequenzmanagementfunktion anzusteuern. Erfindungsgemäß ist vorgesehen, dass die im Feldfahrmodus auszuführende Sequenzmanagementfunktion in einen Feldanfangmodus, welcher bei einem Verlassen einer Straße zum Befahren des Feldes auszuführen ist, und einen Feldendemodus, welcher beim Verlassen des Feldes zum Befahren der Straße auszuführen ist, unterteilt ist, wobei die Steuerungseinrichtung dazu ausgeführt und eingerichtet ist, in Abhängigkeit von einer detektierten Fahrgeschwindigkeit und einer detektierten zur Verfügung stehenden Druckmittelmenge im Hydrauliksystem über die automatische Ausführung und/oder den Umfang der automatischen Ausführung der jeweiligen mehrere auszuführende Einzelsequenzen umfassenden Sequenzmanagementfunktion im Feldanfangmodus oder Feldendemodus zu entscheiden.

Der Erfindung liegt die Überlegung zugrunde, dass spezifische Einstellungen der Funktionseinrichtungen, welche bei einem Wechsel von der Straßenfahrt auf ein Feld in Vorbereitung auf die Feldfahrt, d.h. einen Erntebetrieb, sowie am Ende der Feldfahrt vor einem Wechsel zur Straßenfahrt vorzunehmen sind, automatisiert durchgeführt werden können, um einen Benutzer der Erntemaschine dabei zu unterstützen bzw. davon zu entlasten. Ein weiterer Vorteil besteht darin, dass eine aufeinander abgestimmte Ansteuerung der Funktionseinrichtungen ermöglicht wird.

Insbesondere können der Feldanfangmodus und der Feldendemodus jeweils Einzelsequenzen zur inversen Ansteuerung derselben Funktionseinrichtung und/oder Einzelsequenzen zur Ansteuerung unterschiedlicher Funktionseinrichtungen umfassen. Damit kann dem Umstand Rechnung getragen werden, dass Funktionseinrichtungen der Erntemaschine in Abhängigkeit von ihrer Funktion im Feldanfangmodus für die Feldfahrt zu aktivieren, zu deaktivieren und/oder aus einer Straßenfahrposition in eine Betriebsposition zu bringen sind und im Feldendemodus für die Straßenfahrt zu deaktivieren, zu aktivieren und/oder aus der Betriebsposition in die Straßenfahrposition zu bringen sind.

Bevorzugt kann die Steuerungseinrichtung dazu ausgeführt und eingerichtet sein, die auszuführenden Einzelsequenzen im Feldanfangmodus und im Feldendemodus automatisch in Abhängigkeit von der detektierten Fahrgeschwindigkeit und der zur Verfügung stehenden Druckmittelmenge anzupassen. So kann fahrgeschwindigkeitsabhängig eine automatische Ausführung einer Einzelsequenz durchgeführt oder unterbunden werden. Unter Berücksichtigung der zur Verfügung stehenden Druckmittelmenge kann die Anzahl und Reihenfolge von durchzuführenden Einzelsequenzen modifiziert werden.

Gemäß einer Weiterbildung kann die Steuerungseinrichtung dazu ausgeführt und eingerichtet sein, zur Erkennung eines Wechsels zwischen dem Straßenfahrmodus und dem Feldfahrmodus die Betätigung und/oder den Betätigungszustand eines vom Straßenfahrschalter unabhängigen Schaltelementes zu detektieren. Dabei handelt es sich insbesondere um ein zusätzliches Schaltelement, welches ergänzend zur Betätigung eines Straßenfahrschalters der Erntemaschine zu betätigen ist.

Insbesondere kann mit dem Schaltelement eine Visualisierungseinrichtung verbunden sein, welche in Abhängigkeit vom Status der auszuführenden Sequenzmanagementfunktion unterschiedliche Visualisierungszustände einnimmt. So kann das Schaltelement mit einem Leuchtmittel als Visualisierungseinrichtung ausgeführt sein, welches durch eine entsprechende Ansteuerung durch die Steuerungseinrichtung für den aktuellen Status der Sequenzmanagementfunktion unterschiedliche Leuchtsignale generiert. Insbesondere kann das Leuchtmittel in das Schaltelement integriert sein. Visualisierungszustände können das Einschalten, das Ausschalten oder ein intermittierendes Ein- und Ausschalten sein. Alternativ oder zusätzlich ist eine Farbcodierung denkbar, die den jeweiligen Stati zugeordnet ist oder wird.

Gemäß einer bevorzugten Weiterbildung kann die Steuerungseinrichtung dazu ausgeführt und eingerichtet sein, auszuführende Einzelsequenzen des jeweiligen aktiven Modus der Sequenzmanagementfunktion in Abhängigkeit vom Funktionsumfang der anzusteuernden Funktionseinrichtung automatisch auszuwählen und/oder zur manuellen Auswahl zur Verfügung zu stellen. Das zur Verfügung stellen einer manuellen Auswahl kann mittels einer Bedien- und Eingabeeinheit erfolgen, welche mit der Steuerungseinrichtung durch ein Kommunikationsmittel verbunden ist. Die Bedien- und Eingabeeinheit kann beispielsweise ein Terminal in einer Fahrerkabine der Erntemaschine sein. Alternativ oder zusätzlich kann die Bedien- und Eingabeeinheit eine mobile Datenverarbeitungsvorrichtung sein, beispielsweise ein Smartphone oder ein Tablet-PC.

Bevorzugt kann die Steuerungseinrichtung dazu ausgeführt und eingerichtet sein, den ausführbaren Funktionsumfang durch eine automatische Erkennung der anzusteuernden Funktionseinrichtung und/oder durch eine manuelle Auswahl der anzusteuernden Funktionseinrichtung durch einen Benutzer zu bestimmen. So können in der Speichereinheit der Steuerungseinrichtung Informationen über spezifische Eigenschaften der anzusteuernden Funktionseinrichtungen hinterlegt sein und/oder die Steuerungseinrichtung empfängt Daten von einer der Funktionseinrichtung zugeordneten Steuereinheit oder liest Daten aus einem der Funktionseinrichtung zugeordneten Speichermedium aus. Alternativ oder zusätzlich kann der Benutzer die Funktionseinrichtung und deren Funktionsumfang manuell vorgeben und/oder auswählen und konfigurieren. Ebenso ist ein Import von Daten der betreffenden Funktionseinrichtung über eine drahtlose oder drahtgebundene Kommunikationsschnittstelle denkbar, welcher wiederum automatisiert oder manuell erfolgen kann.

Insbesondere können in der Speichereinheit editierbare Auswahllisten mit Einzelsequenzen hinterlegt sein, die dem jeweiligen Modus der Sequenzmanagementfunktion, dem Feldanfangmodus bzw. dem Feldendemodus, zugeordnet werde oder sind. Dabei können die Auswahllisten manuell editiert oder automatisch angepasst werden. Insbesondere eine automatische Anpassung der Auswahllisten kann beispielsweise im Rahmen der automatischen Erkennung der anzusteuernden Funktionseinrichtung erfolgen.

Gemäß einer Weiterbildung kann die Steuerungseinrichtung dazu ausgeführt und eingerichtet sein, die Ausführung von Einzelsequenzen zumindest einer Funktionseinrichtung in Abhängigkeit von der verfügbaren Druckmittelmenge im Hydrauliksystem gleichzeitig oder sequentiell anzusteuern. Somit können mehrere Einzelsequenzen einer Funktionseinrichtung als ein hydraulischer Verbraucher gleichzeitig ausgeführt werden oder es kann jeweils eine Einzelsequenz zweier Funktionseinrichtungen, die zwei unabhängige hydraulische Verbraucher sind, gleichzeitig ausgeführt werden. Dies hat eine Zeitersparnis zur Folge. Eine sequenzielle Ansteuerung in Abhängigkeit von der verfügbaren Druckmittelmenge kann dabei zusätzlich Prioritäten berücksichtigen, mit der die jeweilige Einzelsequenz zweier Funktionseinrichtungen als hydraulische Verbraucher auszuführen ist.

Bevorzugt kann die Steuerungseinrichtung dazu ausgeführt und eingerichtet sein, in Abhängigkeit vom Überschreiten eines Grenzwertes für die detektierte Fahrgeschwindigkeit den jeweiligen auszuführenden Modus der Sequenzmanagementfunktion automatisch auszuführen. Insbesondere kann damit eine versehentliche Ausführung der Sequenzmanagementfunktion im Stillstand oder im nahezu Stillstand der Erntemaschine vermieden werden. Eine Ausführung der Sequenzmanagementfunktion bei einer Fahrgeschwindigkeit unterhalb des Grenzwertes für die Fahrgeschwindigkeit kann eine aktive und dauerhafte Betätigung des Schaltelementes durch einen Benutzer erfordern. Vorzugsweise kann ein Grenzwert von ca. 2 km/h zugrunde gelegt werden, oberhalb dessen die Ausführung der Sequenzmanagementfunktion nach einer Betätigung des Schaltelementes automatisch durchgeführt wird.

Insbesondere kann der Feldanfangmodus als Einzelsequenzen ein Ausklappen eines klappbaren Vorsatzgerätes, ein Anheben einer Überladevorrichtung, ein Anheben und Ausklappen einer klappbaren Überladevorrichtung, ein Schwenken einer Überladeeinrichtung, einen Betrieb einer Differentialsperre in einem Automatikmodus umfassen.

Bevorzugt kann der Feldendemodus als Einzelsequenzen ein Einklappen eines klappbaren Vorsatzgerätes, ein Überführen einer Überladevorrichtung in eine Parkposition, ein Einklappen und Überführen einer klappbaren Überladevorrichtung in eine Parkposition, ein Spülen einer Einrichtung zur Siliermitteldosierierung umfassen.

Gemäß einer bevorzugten Weiterbildung kann die Steuerungseinrichtung dazu ausgeführt und eingerichtet sein, einen Wechsel zwischen dem Feldanfangmodus und dem Feldendemodus anhand der vorangehenden Modusauswahl und der Zustandsrückmeldung der abzuarbeitenden Einzelsequenzen des vorangehenden Modus vorzunehmen. Dem liegt die Überlegung zugrunde, ungewollte Wechsel zwischen den beiden Modi zu vermeiden. Für einen Wechsel zwischen den beiden Modi bestehen zu erfüllende Voraussetzungen, wovon eine ein inaktiver Zustand der Sequenzmanagementfunktion ist. Ein inaktiver Zustand der Sequenzmanagementfunktion stellt sich ein, wenn der zuletzt ausgeführte Modus vollständig und erfolgreich durchgeführt wurde, der zuletzt ausgeführte Modus fehlerhaft beendet wurde oder eine Abbruchbedingung bei der Ausführung des Modus erfüllt wurde. Weitere Zustände der Sequenzmanagementfunktion bilden der aktive Feldanfangmodus und der aktive Feldendemodus. Der Wechsel vom inaktiven Zustand der Sequenzmanagementfunktion zu einem der beiden Modi, dem Feldanfangmodus oder dem Feldendemodus, erfolgt demnach in Abhängigkeit von dem gespeicherten als nächstes auszuführenden Modus und unter der zusätzlichen Bedingung, dass Startbedingungen für die Ausführung eines der Modi erfüllt und eine Abbruchbedingung des aktiven Modus, Feldanfangmodus oder Feldendemodus, nicht erfüllt ist.

Insbesondere kann das Schaltelement als ein Taster ausgeführt sein, welcher in eine Bedienarmlehne oder einen Multifunktionsgriff integriert sein kann, oder als ein auf einem berührungssensitiven Bildschirm visualisierter virtueller Taster ausgeführt sein kann, die oder der in einer Fahrerkabine der Erntemaschine angeordnet ist.

Gemäß einer bevorzugten Weiterbildung kann die Steuerungseinrichtung dazu ausgeführt und eingerichtet sein, eine Bedien- und Eingabeeinheit anzusteuern, um verschiedene Stati der abzuarbeitenden Einzelsequenzen zu visualisieren.

Die vorliegende Erfindung wird nachstehend anhand eines in den Zeichnungen dargestellten Ausführungsbeispieles näher erläutert.

Es zeigen:
- Fig. 1: eine schematische Darstellung einer selbstfahrenden landwirtschaftlichen Erntemaschine in einer Seitenansicht;
- Fig. 2: ein exemplarisches Ablaufdiagramm bei inaktivem Zustand einer Sequenzmanagementfunktion;
- Fig. 3: ein exemplarisches Ablaufdiagramm eines Feldanfangmodus der Sequenzmanagementfunktion;
- Fig. 4: exemplarisch und schematisch eine Darstellung einer Menüoberfläche einer Bedien- und Eingabeeinheit; und
- Fig. 5: exemplarisch und schematisch eine Darstellung der Menüoberfläche der Bedien- und Eingabeeinheit im Feldendemodus der Erntemaschine.

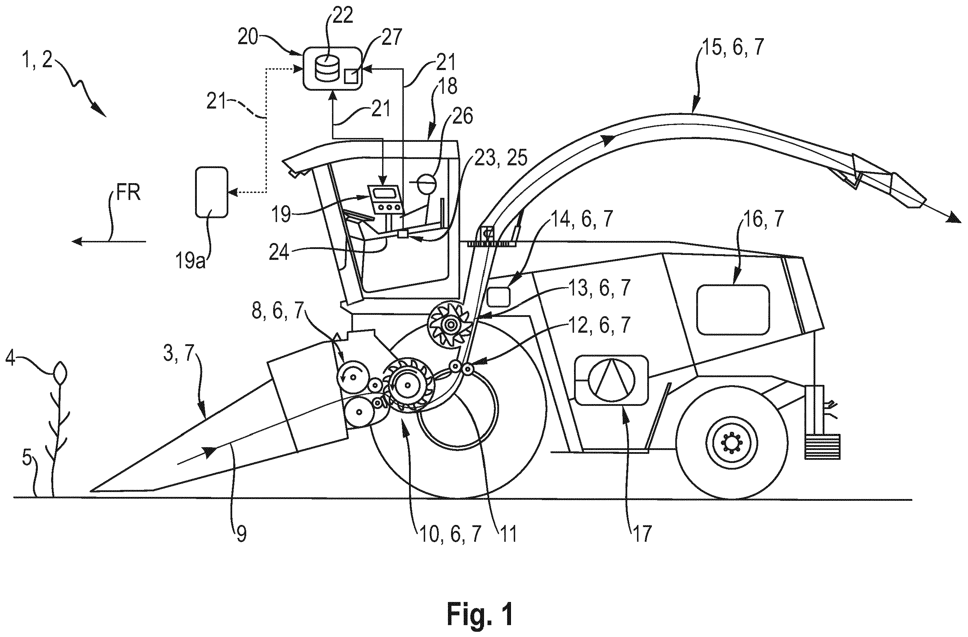

In Fig. 1 ist eine selbstfahrende landwirtschaftliche Erntemaschine 1, insbesondere Feldhäcksler 2, in einer Seitenansicht schematisch dargestellt. Die Erntemaschine 1 umfasst ein Vorsatzgerät 3 zur Aufnahme von Erntegut 4 von einem Feld 5, wenigstens ein Arbeitsorgan 6 zur Bearbeitung und/oder Förderung des Ernteguts 4, sowie einen - nicht dargestellten - hydrostatischen Fahrantrieb. Die Arbeitsorgane 6 sowie der hydrostatischen Fahrantrieb und dessen als Funktionseinrichtungen 7.

Das Vorsatzgerät 2 nimmt das Erntegut 4 vom Feld 5 auf und fördert es einer Einzugsvorrichtung 8 als Arbeitsorgan 6 zu, die im Ausführungsbeispiel aus einer Walzengruppe mit paarweise angeordneten oberen und unteren Einzugswalzen besteht. Die Einzugswalzen der Einzugsvorrichtung 8 üben eine Presskraft auf das aufgenommene Erntegut 4 aus. Die Einzugsvorrichtung 8 fördert das zu einer Erntegutmatte 9 verdichtete Erntegut 4 einer Häckselvorrichtung 10 zu, welche eine um eine Rotationsachse rotierend angetriebene Messertrommel mit über deren Umfang verteilt angeordneten Messern aufweist. Die Messer schneiden die von der Einzugsvorrichtung zugeführte Erntegutmatte 9 an einer Gegenschneide. Das geschnittene bzw. gehäckselte Erntegut 4 wird durch die Rotationsbewegung der Messertrommel in einen nachgeordneten Förderschacht 11 gefördert, von wo es, je nach Ausstattung des Feldhäckslers 2, durch eine optional im Gutflussweg angeordnete Nachbearbeitungsvorrichtung 12, auch als Konditioniervorrichtung oder Corncracker bezeichnet, aufbereitet und von einer nachgeordneten Nachbeschleunigervorrichtung 13 zusätzlich beschleunigt durch eine Überladevorrichtung 15 in ein mitgeführtes Transportfahrzeug gefördert wird.

Im Bereich der Nachbeschleunigervorrichtung 13 ist - schematisch angedeutet - eine Siliermitteldosiervorrichtung 14 angeordnet, die mittels einer Förderpumpe mit veränderlichem Fördervolumen eine Flüssigkeit in den Förderschacht 11 einbringt. Hierzu ist ein in dem Förderschacht 11 endender, sich in Stromrichtung des Ernteguts öffnender - nicht dargestellter - Injektor vorgesehen, wodurch die Flüssigkeit in fein verspritzter Form auf das vorbeiströmende Erntegut 4 appliziert wird.

Zum Antreiben der Arbeitsorgane 6 des Feldhäckslers 2 ist ein Antriebsmotor 16 vorgesehen. Die Arbeitsorgane 6 können durch einen schaltbaren - nicht dargestellten - Hauptantriebsstrang, mit der Motorabtriebswelle des Antriebsmotors 16 verbunden sein. Der Antriebsmotor 16 dient unter anderem auch zum Betreiben des hydrodynamischen Fahrantriebs des Feldhäckslers 2.

Die Einzugsvorrichtung 8, die Häckselvorrichtung 10, die Nachbearbeitungsvorrichtung 12, die Nachbeschleunigervorrichtung 13, die Siliermitteldosiervorrichtung 14 sowie die Überladevorrichtung 15 werden nachfolgend verallgemeinernd als Arbeitsorgane 6 bezeichnet.

Unter dem Begriff Funktionseinrichtungen 7 sind neben den vorstehend genannten Arbeitsorganen 6 auch der Antriebsmotor 16 sowie weitere Komponenten eines Fahrantriebsstranges des Feldhäckslers 2 zusammengefasst.

Weiterhin weist der Feldhäcksler 2 ein Hydrauliksystem 17 mit zumindest einer Hydraulikpumpe zur Versorgung der Funktionseinrichtungen 7 mit einem Druckmittel auf.

Der Feldhäcksler 2 umfasst weiterhin eine Fahrerkabine 18, in der eine Bedien- und Eingabeeinheit 19 angeordnet ist. Die Bedien- und Eingabeeinheit 19 ist mit einer Steuerungseinrichtung 20 durch ein Kommunikationsmittel 21 verbunden. Die Steuerungseinrichtung 20 ist dazu eingerichtet, die Funktionseinrichtungen 7 der Erntemaschine 1 respektive des Feldhäckslers 2 gemäß zumindest einer in einer Speichereinheit 22 der Steuerungseinrichtung 20 hinterlegten Sequenzmanagementfunktion 27 bei einem jeweiligen Wechsel zwischen einem Straßenfahrmodus und einem Feldfahrmodus anzusteuern. Die Bedien- und Eingabeeinheit 19 kann beispielsweise ein Terminal in der Fahrerkabine 18 der Erntemaschine 1 sein. Alternativ oder zusätzlich kann die Bedien- und Eingabeeinheit 19 eine mobile Datenverarbeitungsvorrichtung 19a sein, beispielsweise ein Smartphone oder ein Tablet-PC, die durch ein Kommunikationsmittel 21 mit der Steuerungseinrichtung 20 im Datenaustausch steht.

In eine Bedienarmlehne 24 kann ein Schaltelement 23 integriert sein, welches mit der Steuerungseinrichtung 20 signaltechnisch verbunden ist. Das Schaltelement 23 kann als ein durch einen Benutzer 26 betätigbarer mechanischer Taster 25 ausgeführt sein. Alternativ kann das Schaltelement 23 in einen in der Fahrerkabine 18 vorgesehenen Multifunktionsgriff integriert sein. Alternativ oder zusätzlich kann das Schaltelement 23 als ein auf einem berührungssensitiven Bildschirm der Bedien- und Eingabeeinheit 19 visualisierter virtueller Taster 25 ausgeführt sein.

Insbesondere kann mit dem Schaltelement 23 eine Visualisierungseinrichtung 56 verbunden sein, welche in Abhängigkeit vom Status der auszuführenden Sequenzmanagementfunktion 27 unterschiedliche Visualisierungszustände einnimmt. So kann das Schaltelement 23 mit einem Leuchtmittel als Visualisierungseinrichtung 56 ausgeführt sein, welches durch eine entsprechende Ansteuerung durch die Steuerungseinrichtung 20 für den aktuellen Status der Sequenzmanagementfunktion 27 unterschiedliche Leuchtsignale generiert. Insbesondere kann das Leuchtmittel in das Schaltelement 23 integriert sein. Visualisierungszustände können das Einschalten, das Ausschalten oder ein intermittierendes Ein- und Ausschalten der Visualisierungseinrichtung 56 sein. Alternativ oder zusätzlich ist eine Farbcodierung zur Kennzeichnung der Stati denkbar.

Die Steuerungseinrichtung 20 ist dazu ausgeführt und eingerichtet, die im Feldfahrmodus auszuführende Sequenzmanagementfunktion 27 in einen Feldanfangmodus 39, welcher bei einem Verlassen einer Straße zum Befahren des Feldes 5 auszuführen ist, und einen Feldendemodus 40, welcher beim Verlassen des Feldes 5 zum Befahren der Straße auszuführen ist, unterteilt auszuführen. Im laufenden Erntebetrieb, d.h. nach erfolgter Ausführung der mehrere auszuführende Einzelsequenzen 52a ... 52n umfassenden Sequenzmanagementfunktion 27 im Feldanfangmodus 39, wird die Sequenzmanagementfunktion 27 in einen inaktiven Zustand versetzt. Während des inaktiven Zustands der Sequenzmanagementfunktion 27, d.h. während des Erntebetriebs der Erntemaschine 1, erfolgt die Ansteuerung der Funktionseinrichtungen 7 nach anderen Kriterien durch die Steuerungseinrichtung 20 und/oder durch zusätzliche Steuereinheiten der Erntemaschine 1.

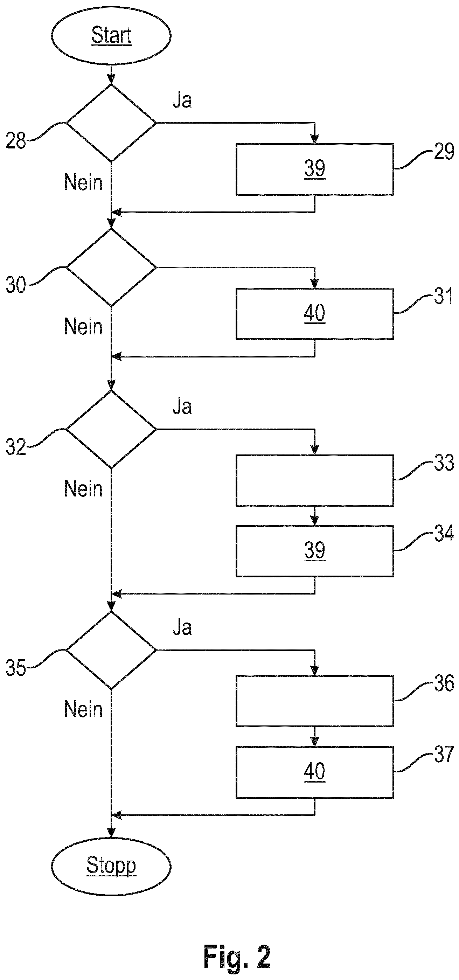

Die Darstellung in Fig. 2 zeigt ein exemplarisches Ablaufdiagramm bei inaktivem Zustand der Sequenzmanagementfunktion 27. Grundsätzlich wird, ausgehend vom inaktiven Zustand der Sequenzmanagementfunktion 27, welche für die Dauer des Erntebetriebs bzw. der Feldbearbeitung vorherrscht, zwischen dem Feldanfangmodus 39 und dem Feldendemodus 40 gewechselt, sofern die auszuführenden Einzelsequenzen 52a ... 52n des Feldanfangmodus 39 bzw. des Feldendemodus 40 erfolgreich durchgeführt wurden. Ein Wechsel vom Feldanfangmodus 39 in den Feldendemodus 40 erfolgt immer über den inaktiven Zustand der Sequenzmanagementfunktion 27.

Im ersten Schritt 28 wird geprüft, ob eine Startbedingung vorliegt, welche eine Zustandsänderung zur Folge hat, um im Schritt 29 die Sequenzmanagementfunktion 27 von inaktiv in den Feldanfangmodus 39 zu schalten. Die Startbedingung ist die Betätigung eines Straßenfahrtschalters, um vom Straßenfahrmodus in den Feldfahrmodus zu wechseln. Dieser Wechsel wird in der Speichereinheit 22 abgespeichert. Anschließend wird nach der Änderung des Zustands gemäß dem Schritt 29 mit Schritt 30 fortgefahren.

Verneinendenfalls wird im nachfolgenden Schritt 30 geprüft, ob eine Startbedingung vorliegt, welche eine Zustandsänderung zur Folge hat, um im Schritt 31 die Sequenzmanagementfunktion 27 von inaktiv in den Feldendemodus 40 zu schalten. Diese Startbedingung ist das Abschalten des Hauptantriebsstranges. Das Abschalten des Hauptantriebsstranges führt dazu, dass im Schritt 31 die Sequenzmanagementfunktion 27 in den Feldendemodus 40 schaltet. Zudem wird diese Zustandsänderung, das Umschalten in den Feldendemodus 40 in der Speichereinheit 22 gespeichert, so dass diese Änderung beim erneuten Anschalten des Hauptantriebsstranges abrufbar ist. Dies dient dazu, einen ungewollten Wechsel zwischen den Modi, vom Feldendemodus 40 in den Feldanfangmodus 39, zu verhindern, wenn während der Feldfahrt der Hauptantriebsstrang temporär abgeschaltet und angeschaltet wird, obwohl der Bearbeitungsprozess auf dem Feld noch nicht abgeschlossen ist, beispielsweise zu Wartungszwecken.

Verneinendenfalls wird im nachfolgenden Schritt 32 geprüft, ob die Zustandsänderung gemäß Schritt 29 durchgeführt wurde und die Startbedingung erfüllt ist, jedoch keine Abbruchbedingung des Feldanfangmodus 39. Bejahendenfalls werden im Schritt 33 die Zustände für alle auszuführenden Einzelsequenzen 52a ... 52n zurückgesetzt. Im nachfolgenden Schritt 34 wird dann vom inaktiven Zustand der Sequenzmanagementfunktion 27 in den Zustand Feldanfangmodus 39 gewechselt und die im Feldanfangmodus 39 auszuführenden Einzelsequenzen 52a ... 52n werden abgearbeitet.

Verneinendenfalls wird im nachfolgenden Schritt 35 geprüft, ob die Zustandsänderung gemäß Schritt 31 durchgeführt wurde und die Startbedingung erfüllt ist, jedoch keine Abbruchbedingung des Feldendemodus 40. Bejahendenfalls werden im Schritt 36 die Zustände für alle auszuführenden Einzelsequenzen 52a ... 52n zurückgesetzt. Im nachfolgenden Schritt 37 wird dann vom inaktiven Zustand der Sequenzmanagementfunktion 27 in den Zustand Feldendemodus 40 gewechselt und die im Feldendemodus 40 auszuführenden Einzelsequenzen 52a ... 52n werden abgearbeitet.

Verneinendenfalls oder nach Abarbeitung der Schritte 36 und 37 endet der Ablauf.

Der Wechsel vom inaktiven Zustand der Sequenzmanagementfunktion 27 zu einem der beiden anderen Zustände, dem Feldanfangmodus 39 bzw. dem Feldendemodus 40, erfolgt demnach in Abhängigkeit des in der Speichereinheit 22 gespeicherten nächsten Zustands und nur, wenn die korrespondierenden Startbedingungen erfüllt und die korrespondierenden Abbruchbedingungen nicht erfüllt sind.

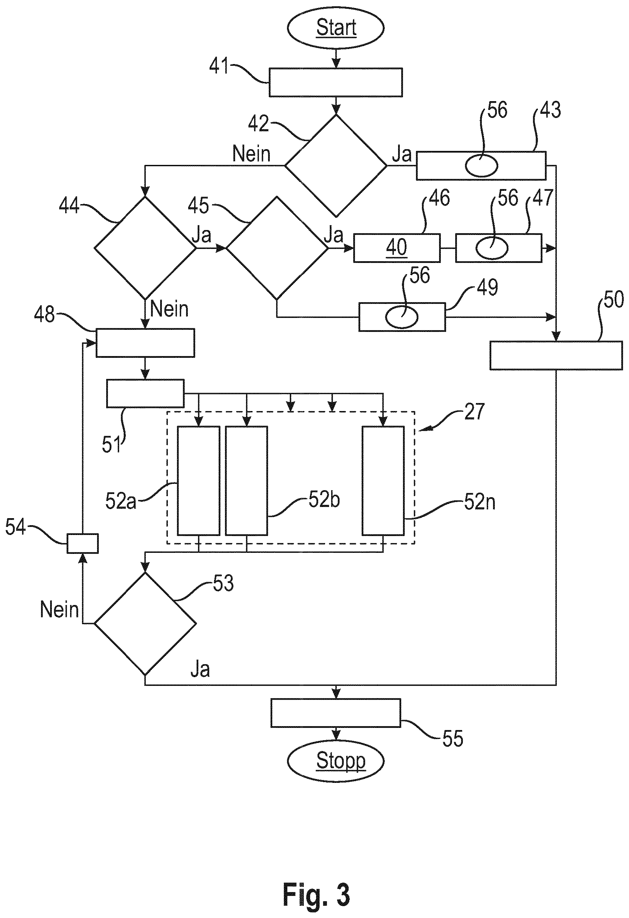

In Fig. 3 ist ein exemplarisches Ablaufdiagramm des Feldanfangmodus 39 der Sequenzmanagementfunktion 27 dargestellt. Das Ablaufdiagramm gilt weitgehend entsprechend für den Feldendemodus 40, sodass dieser nicht explizit erläutert wird. Weiter unten ist lediglich der Unterschied zwischen dem Ablaufdiagramm des Feldanfangmodus 39 und dem des Feldendemodus 40 hervorgehoben.

Im Schritt 41 wird die Betätigung des Schaltelementes 23 respektive des Tasters 25 erfasst und ausgewertet. Die Betätigung des Schaltelementes 23 wird als Initiierung zur Ausführung des Feldanfangmodus 39 bzw. des Feldendemodus 40 interpretiert. Durch die Betätigung des Schaltelementes 23 kann zudem die Bedien- und Eingabeeinheit 19 durch die Steuerungseinrichtung 20 angesteuert werden, um dem Benutzer 26 den als nächstes auszuführenden Modus, entweder den Feldanfangmodus 39 oder den Feldendemodus 40, in einem Statusfenster 58 anzuzeigen. Dessen Ausführung muss der Benutzer 26 im Anschluss durch eine zweite Betätigung des Schaltelementes 23 bestätigen.

Im nachfolgenden Schritt 42 wird geprüft, ob eine Abbruchbedingung während der Aktivierung zur Ausführung des Feldanfangmodus 39 vorliegt. Dies gilt analog für den Feldendemodus 40. Die Abbruchbedingung bildet das Ausbleiben der erneuten Betätigung des Schaltelementes 23 innerhalb eines vorgegebenen Zeitintervalls, welches vorzugsweise mehrere Sekunden beträgt.

Bei Vorliegen der Abbruchbedingung wird gemäß Schritt 43 die Visualisierungsvorrichtung 56 nicht aktiviert. Die Sequenzmanagementfunktion 27 verbleibt gemäß dem nachfolgenden Schritt 50 im inaktiven Zustand.

Verneinendenfalls wird vom Schritt 42 zum Schritt 44 übergegangen. Im Schritt 44 wird geprüft, ob die Ausführung des Feldanfangmodus 39 abgeschlossen wurde. Bejahendenfalls wird im nachfolgenden Schritt 45 geprüft, ob die Ausführung der Einzelsequenzen 52a ... 52n des Feldanfangmodus 39 erfolgreich war, d.h. keine für den Feldanfangmodus 39 spezifische Abbruchbedingung erfüllt ist. Bejahendenfalls wird im nachfolgenden Schritt 46 der Zustand von Feldanfangmodus 39 auf Feldendemodus 40 gesetzt.

Die Visualisierungsvorrichtung 56 wird im Schritt 47 entsprechend durch die Steuerungseinrichtung 20 angesteuert, um das den geänderten aktuellen Status der Sequenzmanagementfunktion 27 spezifische Leuchtsignale zu generieren. Die Sequenzmanagementfunktion 27 verbleibt jedoch gemäß dem nachfolgenden Schritt 50 im inaktiven Zustand.

Wird hingegen im Schritt 45 festgestellt, dass die Ausführung der Einzelsequenzen 52a ... 52n des Feldanfangmodus 39 nicht erfolgreich war, wird die Visualisierungsvorrichtung 56 gemäß Schritt 49 nicht aktiviert. Die Sequenzmanagementfunktion 27 verbleibt gemäß dem nachfolgenden Schritt 50 im inaktiven Zustand.

Wird hingegen im Schritt 44 festgestellt, dass die Ausführung der Einzelsequenzen 52a ... 52n des Feldanfangmodus 39 nicht abgeschlossen wurde, werden im nachfolgenden Schritt 48 entsprechend des Feldanfangmodus 39 die Funktionseinrichtungen 7 angesteuert.

Hierzu erfolgt im Schritt 51 eine Abstimmung und Anpassung der Reihenfolge, in der die Funktionseinrichtungen 7 durch die Steuerungseinrichtung 20 angesteuert werden, welche entsprechend der beiden Modi der Sequenzmanagementfunktion 27 anzusteuern sind. Die Steuerungseinrichtung 20 ist dazu ausgeführt und eingerichtet, in Abhängigkeit von einer detektierten Fahrgeschwindigkeit und einer detektierten zur Verfügung stehenden Druckmittelmenge im Hydrauliksystem 17 über die automatische Ausführung und/oder den Umfang der automatischen Ausführung der jeweiligen mehrere auszuführende Einzelsequenzen 52a ... 52n umfassenden Sequenzmanagementfunktion 27 im Feldanfangmodus 39 oder Feldendemodus 40 zu entscheiden.

Im Schritt 53 wird geprüft ob die im Zuge des Feldanfangmodus 39 auszuführenden Einzelsequenzen 52a ... 52n für alle anzusteuernden Funktionseinrichtungen 7 abgearbeitet wurden. Die Steuerungseinrichtung 20 ist dazu ausgeführt und eingerichtet, die Ausführung von Einzelsequenzen 52a ... 52n in Abhängigkeit von der verfügbaren Druckmittelmenge im Hydrauliksystem 17 gleichzeitig oder sequentiell anzusteuern. Somit können im Schritt 51 zumindest einige der Funktionseinrichtungen 7 gleichzeitig zur Abarbeitung von Einzelsequenzen 52a ... 52n angesteuert werden.

Wird im Schritt 53 festgestellt, dass noch nicht alle anzusteuernden Funktionseinrichtungen 7 angesteuert wurden, wird im Schritt 54 entsprechend mit einer der verbleibenden anzusteuernden Funktionseinrichtungen 7 fortgefahren und zum Schritt 48 gesprungen.

Wird hingegen im Schritt 53 festgestellt, dass alle anzusteuernden Funktionseinrichtungen 7 angesteuert wurden, wird im Schritt 55 eine entsprechende Nachricht im Statusfenster 58 der Bedien- und Eingabeeinheit 19 angezeigt.

Das in Fig. dargestellte Ablaufdiagramm unterscheidet sich im aktiven Feldendemodus 40 vom Feldanfangmodus 39 insbesondere dadurch, dass im Schritt 46 der Zustand von Feldendemodus 40 auf Feldanfangmodus 40 gesetzt wird. Dabei kann die Anzahl der ausführbaren Einzelsequenzen 52a ... 52n des Feldendemodus 40 von denen des Feldanfangmodus 39 abweichen. Des Weiteren können der Feldanfangmodus 39 und der Feldendemodus 40 jeweils Einzelsequenzen 52a ... 52n zur inversen Ansteuerung derselben Funktionseinrichtung 7 und/oder Einzelsequenzen 52a ... 52n zur Ansteuerung unterschiedlicher Funktionseinrichtungen 7 umfassen. Unter dem Begriff inverse Ansteuerung ist die Umkehrung respektive Rückgängigmachung einer Ansteuerung einer der Funktionseinrichtungen 7 zu verstehen. Als Beispiel für eine inverse Ansteuerung derselben Funktionseinrichtung 7 wird die Ansteuerung der Überladevorrichtung 15 als Funktionseinrichtung 7 genannt. Im Feldanfangmodus 39 wird die Überladevorrichtung 15 vom Ablagebock in vertikaler Richtung angehoben. Im Feldendemodus 40 wird die Überladevorrichtung 15 auf den Ablagebock vertikal abgesenkt. Ein weiterer Unterschied besteht in der Ansteuerung der Visualisierungsvorrichtung 56, welche gegenüber dem Feldanfangmodus 39 ebenfalls invers ist.

Die Steuerungseinrichtung 20 kann dazu ausgeführt und eingerichtet sein, auszuführende Einzelsequenzen 52a ... 52n des jeweiligen aktiven Modus 39, 40 der Sequenzmanagementfunktion 27 in Abhängigkeit vom Funktionsumfang der anzusteuernden Funktionseinrichtung 7 automatisch auszuwählen und/oder zur manuellen Auswahl zur Verfügung zu stellen. Das zur Verfügung stellen einer manuellen Auswahl kann mittels der Bedien- und Eingabeeinheit 19 erfolgen.

Bevorzugt kann die Steuerungseinrichtung 20 dazu ausgeführt und eingerichtet sein, den im jeweiligen aktiven Modus 39, 40 ausführbaren Funktionsumfang durch eine automatische Erkennung der anzusteuernden Funktionseinrichtung 7 und/oder durch eine manuelle Auswahl der anzusteuernden Funktionseinrichtung 7 durch Benutzer 26 zu bestimmen. So können in der Speichereinheit 22 der Steuerungseinrichtung 20 Informationen über spezifische Eigenschaften der anzusteuernden Funktionseinrichtungen 7 hinterlegt sein und/oder die Steuerungseinrichtung 20 empfängt Daten von einer der Funktionseinrichtung 7 zugeordneten Steuereinheit und/oder liest Daten aus einem der Funktionseinrichtung 7 zugeordneten Speichermedium aus. Alternativ oder zusätzlich kann der Benutzer 26 die Funktionseinrichtung 7 und deren Funktionsumfang manuell vorgeben und/oder auswählen und konfigurieren. Ebenso ist ein Import von Daten der betreffenden Funktionseinrichtung 7 über eine drahtlose oder drahtgebundene Kommunikationsschnittstelle aus einer externen Datenquelle denkbar, wobei der Import der Daten wiederum automatisiert oder manuell erfolgen kann.

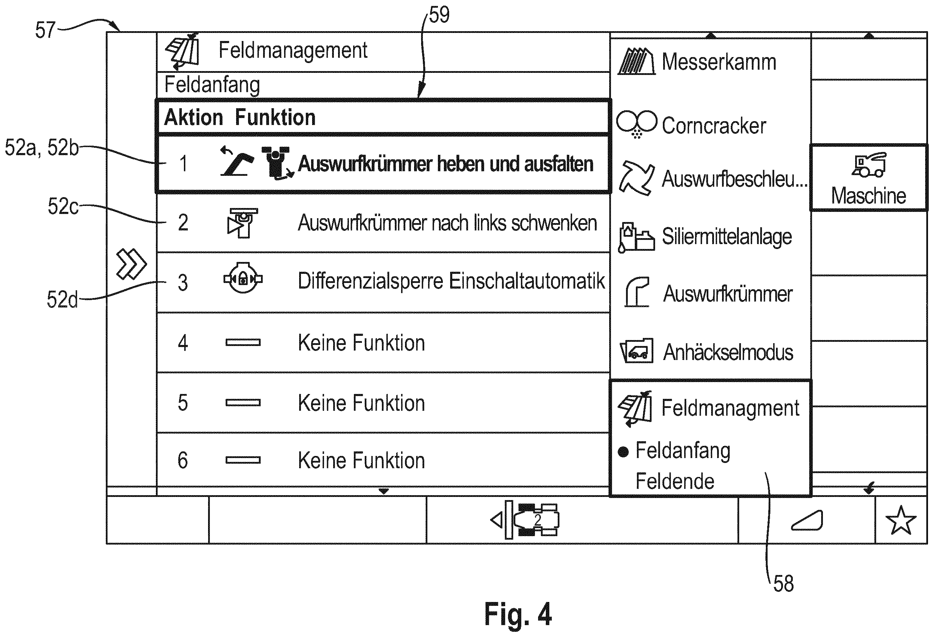

In Fig. 4 ist exemplarisch und schematisch eine Darstellung einer Menüoberfläche 57 der Bedien- und Eingabeeinheit 19 gezeigt.

Der Feldanfangmodus 39 umfasst als Einzelsequenzen 52a ... 52n von Funktionseinrichtungen 7 in nicht abschließender Aufzählung ein Ausklappen eines klappbar ausgeführten Vorsatzgerätes 3, ein Anheben der Überladevorrichtung 15, ein Anheben und Ausklappen einer klappbar oder faltbar ausgeführten Überladevorrichtung 15, ein Schwenken der Überladeeinrichtung 15, einen Betrieb einer Differentialsperre in einem Automatikmodus. Wie aus der vorstehenden Auflistung ersichtlich, können die verfügbaren Einzelsequenzen 52a ... 52n in Abhängigkeit vom Funktionsumfang der Funktionseinrichtungen 7 variieren.

Im Statusfenster 58 wird der aktive Modus der Sequenzmanagementfunktion 27, hier der Feldanfangmodus 39, angezeigt. Im nebenstehenden Auswahlmenü 59, welches hier beispielhaft listenförmig aufgebaut ist, sind Funktionseinrichtungen 7 aufgelistet, welche während der Ausführung des Feldanfangmodus 39 automatisiert angesteuert werden. Im dargestellten exemplarischen Ausführungsbeispiel sind als anzusteuernde Funktionseinrichtungen 7 die Überladevorrichtung 15 sowie eine Komponente des Fahrantriebsstranges des Feldhäckslers 2, hier und vorzugsweise die Differentialsperre, dargestellt.

Zugleich kann die listenförmige Darstellung zumindest teilweise die Reihenfolge vorgeben, in welcher die verschiedenen Einzelsequenzen 52a, 52b, 52c und 52d auszuführen sind. Die Reihenfolge der Ansteuerung der Überladevorrichtung 15 ist insoweit bereits durch die Überladevorrichtung 15 als anzusteuernde Funktionseinrichtung 7 vorgegeben, als dass die Überladevorrichtung 15 gemäß der Einzelsequenz 52a zunächst angehoben werden muss und erst anschließend gemäß der Einzelsequenz 52c zu einer Seite verschwenkt werden kann. Weiter ist die Reihenfolge davon abhängig, ob die Überladevorrichtung 15 aufgrund ihrer Länge falt- oder klappbar ausgeführt ist. Ist die Überladevorrichtung 15 falt- oder klappbar ausgeführt, so bedarf es der zusätzlichen Einzelsequenz 52b, um die angehobene Überladevorrichtung 15 zunächst zu entfalten bzw. auszuklappen, bevor diese gemäß der Einzelsequenz 52c zu einer Seite verschwenkt wird. Dabei kann das Erfordernis der Einzelsequenz 52b, das Entfalten bzw. Ausklappen, wie weiter oben bereits ausgeführt, durch die Steuerungseinrichtung 20 selbsttätig erkannt werden.

Die Durchführung der Einzelsequenzen 52d, mit der die Differentialsperre als anzusteuernde Funktionseinrichtungen 7 angesteuert wird, kann dabei parallel zur Durchführung der Einzelsequenz 52a erfolgen, gemäß der die Überladevorrichtung 15 angehoben wird. Das Ansteuern des klappbar ausgeführten Vorsatzgerätes 3 gemäß einer weiteren Einzelsequenz 52e hingegen würde, in Abhängigkeit von der detektierten zur Verfügung stehenden Druckmittelmenge im Hydrauliksystem 17 entweder parallel zur Einzelsequenz 52a oder sequentiell erfolgen. Die Entscheidung der parallelen oder sequentiellen Ausführung der Einzelsequenzen 52a, 52b und 52c und der Einzelsequenz 52e wird durch die Steuerungseinrichtung 20 vorgenommen. Dabei kann die Steuerungseinrichtung 20 die sequentiell abzuarbeitenden Einzelsequenzen 52a, 52b und 52c zur Ansteuerung der Überladevorrichtung 15 und die Einzelsequenz 52e zum Ausklappen des Vorsatzgerätes 3 selbstständig priorisieren. Alternativ kann die Steuerungseinrichtung 20 dazu eingerichtet sein, die Ansteuerung der Funktionseinrichtungen 7, die durch Druckbeaufschlagung durch das Hydrauliksystem 17 zu betätigen sind, anhand einer durch den Benutzer 26 frei konfigurierbaren Reihenfolge vorzunehmen.

Insbesondere können in der Speichereinheit 22 editierbare Auswahllisten mit Einzelsequenzen 52a ... 52n hinterlegt sein, die dem jeweiligen Modus der Sequenzmanagementfunktion 27, Feldanfangmodus 39 und dem Feldendemodus 40, zugeordnet sind. Dabei können die Auswahllisten manuell editiert oder automatisch angepasst werden, was beispielsweise im Rahmen der automatischen Erkennung der anzusteuernden Funktionseinrichtung 7 und ihres Funktionsumfangs erfolgen kann.

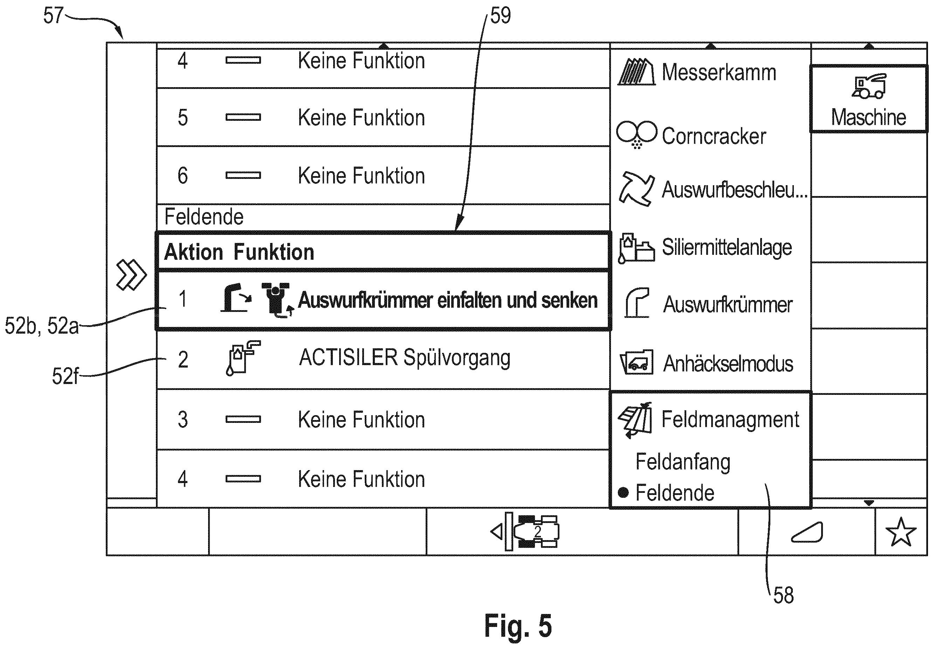

In Fig. 5 ist exemplarisch und schematisch eine Darstellung der Menüoberfläche 57 der Bedien- und Eingabeeinheit 19 im Feldendemodus 40 der Erntemaschine 1 gezeigt. Der Aufbau und die Struktur der Menüoberfläche 57 entspricht der gemäß Fig. 4. Ein Unterschied besteht in der zum Teil inversen Ansteuerung der Funktionseinrichtungen 7, hier der klappbar ausgeführten Überladevorrichtung 15. So wird im Feldendemodus 40 zunächst die Einzelsequenz 52b invers ausgeführt, wobei diese das Zusammenklappen oder Zusammenfalten umfasst. Im Anschluss kann die Einzelsequenz 52a ausgeführt werden, welche das Absenken der Überladevorrichtung 15 zum Gegenstand hat. Wie anhand des in Fig. 4 dargestellten Ausführungsbeispiels erläutert, ist auch hier eine weitere Einzelsequenz 52f beispielhaft gezeigt, welche einen auszuführenden Spülvorgang der Siliermitteldosiervorrichtung 14 umfasst. Diese Einzelsequenz 52f kann parallel zu den Einzelsequenzen 5a und 52b ausgeführt werden. Die Einzelsequenz 52f, das Durchführen des Spülvorgangs, ist jedoch nicht vom Feldanfangmodus 39 umfasst, da für diesen nicht erforderlich.

Der Feldendemodus 40 umfasst als Einzelsequenzen 52a ... 52n ein Einklappen eines klappbar ausgeführten Vorsatzgerätes 3, ein Überführen der Überladevorrichtung 15 in eine Parkposition, d.h. die Ablage auf dem Ablagebock durch vertikales Absenken, ein Einklappen und Überführen einer klappbar ausgeführten Überladevorrichtung 15 in eine Parkposition, ein Spülen der Siliermitteldosiervorrichtung 14.

Die Steuerungseinrichtung 20 ist dazu ausgeführt und eingerichtet, in Abhängigkeit vom Überschreiten eines Grenzwertes für die detektierte Fahrgeschwindigkeit den jeweiligen auszuführenden Modus 39, 40 der Sequenzmanagementfunktion 27 automatisch auszuführen. Dies dient dazu, Sicherheitsanforderungen im Betreib der Erntemaschine 1 einzuhalten, um eine versehentliche Ausführung eines Modus 39, 40 der Sequenzmanagementfunktion 27 im Stillstand oder im nahezu Stillstand der Erntemaschine 1 zu vermeiden. Eine Ausführung der Sequenzmanagementfunktion 27 bei einer Fahrgeschwindigkeit unterhalb des Grenzwertes kann eine aktive und dauerhafte Betätigung des Schaltelementes 23 erfordern. Ein Unterbrechen der Betätigung des Schaltelementes 23 bewirkt den sofortigen Abbruch der auszuführenden Sequenzmanagementfunktion 27. Insbesondere kann damit eine weitere Verstellung aller Funktionseinrichtungen 7, die bereits während der Ausführung der Sequenzmanagementfunktion 27 angesteuert wurden, unterbrochen werden. Dies ist aus Sicherheitsgründen notwendig, da im Stillstand oder bei kleinen Geschwindigkeiten eine Person an den Funktionseinrichtungen 7 des Feldhäckslers 2 arbeiten könnte. Durch das permanente Betätigen des Schaltelementes 23 muss der Benutzer 26 bestätigen, dass dies nicht der Fall ist.

Vorzugsweise kann als Grenzwert eine Fahrgeschwindigkeit von ca. 2 km/h zugrunde gelegt werden, oberhalb dessen die Ausführung der Sequenzmanagementfunktion 27 nach entsprechender Betätigung des Schaltelementes 23 automatisch durchgeführt wird.

### Bezugszeichenliste

| | | | |
|---|---|---|---|
| 1 | Erntemaschine | 33 | Schritt |
| 2 | Feldhäcksler | 34 | Schritt |
| 3 | Vorsatzgerät | 35 | Schritt |
| 4 | Erntegut | 36 | Schritt |
| 5 | Feld | 37 | Schritt |
| 6 | Arbeitsorgan | 38 | Schritt |
| 7 | Funktionseinrichtung | 39 | Feldanfangmodus |
| 8 | Einzugsvorrichtung | 40 | Feldendemodus |
| 9 | Erntegutmatte | 41 | Schritt |
| 10 | Häckselvorrichtung | 42 | Schritt |
| 11 | Förderschacht | 43 | Schritt |
| 12 | Nachbearbeitungsvorrichtung | 44 | Schritt |
| 13 | Nachbeschleunigervorrichtung | 45 | Schritt |
| 14 | Siliermitteldosiervorrichtung | 46 | Schritt |
| 15 | Überladeeinrichtung | 47 | Schritt |
| 16 | Antriebsmotor | 48 | Schritt |
| 17 | Hydrauliksystem | 49 | Schritt |
| 18 | Fahrerkabine | 50 | Schritt |
| 19 | Bedien- und Eingabeeinheit | 51 | Schritt |
| 19a | Datenverarbeitungsvorrichtung | 52a ... 52n | Einzelsequenz |
| 20 | Steuerungseinrichtung | 53 | Schritt |
| 21 | Kommunikationsmittel | 54 | Schritt |
| 22 | Speichereinheit | 55 | Schritt |
| 23 | Schaltelement | 56 | Visualisierungseinrichtung |
| 24 | Bedienarmlehne | 57 | Menüoberfläche |
| 25 | Taster | 58 | Statusfenster |
| 26 | Benutzer | 59 | Auswahlmenü |
| 27 | Sequenzmanagementfunktion | | |
| 28 | Schritt | FR | Fahrtrichtung |
| 29 | Schritt | | |
| 30 | Schritt | | |
| 31 | Schritt | | |
| 32 | Schritt | | |

## Patentansprüche

1. Selbstfahrende landwirtschaftliche Erntemaschine (1), insbesondere Feldhäcksler (2), mit einem Vorsatzgerät (3) zur Aufnahme von Erntegut (4) von einem Feld (5), wenigstens einem Arbeitsorgan (6) zur Bearbeitung und/oder Förderung des Ernteguts (4) sowie einem hydrostatischen Fahrantrieb als Funktionseinrichtungen (7), einem Hydrauliksystem (17) zur Versorgung zumindest einiger der Funktionseinrichtungen (7) mit einem Druckmittel, sowie einer Steuerungseinrichtung (20), die dazu eingerichtet ist, die Funktionseinrichtungen (7) der Erntemaschine (1) gemäß zumindest einer in einer Speichereinheit (22) der Steuerungseinrichtung (20) hinterlegten Sequenzmanagementfunktion (27) bei einem jeweiligen Wechsel zwischen Straßenfahrmodus und Feldfahrmodus anzusteuern, **dadurch gekennzeichnet, dass** die im Feldfahrmodus auszuführende Sequenzmanagementfunktion (27) in einen Feldanfangmodus (39), welcher bei einem Verlassen einer Straße zum Befahren des Feldes (5) auszuführen ist, und einen Feldendemodus (40), welcher beim Verlassen des Feldes (5) auszuführen ist, unterteilt ist, wobei die Steuerungseinrichtung (20) dazu ausgeführt und eingerichtet ist, in Abhängigkeit von einer detektierten Fahrgeschwindigkeit und einer detektierten zur Verfügung stehenden Druckmittelmenge im Hydrauliksystem (17) über die automatische Ausführung und/oder den Umfang der automatischen Ausführung der jeweiligen mehrere auszuführende Einzelsequenzen (52a ... 52n) umfassenden Sequenzmanagementfunktion (27) im Feldanfangmodus (39) oder Feldendemodus (40) zu entscheiden.

2. Erntemaschine (1) nach Anspruch 1, **dadurch gekennzeichnet, dass** der Feldanfangmodus (39) und der Feldendemodus (40) jeweils Einzelsequenzen (52a ... 52n) zur inversen Ansteuerung derselben Funktionseinrichtung (7) und/oder Einzelsequenzen (52a ... 52n) zur Ansteuerung unterschiedlicher Funktionseinrichtungen (7) umfasst.

3. Erntemaschine (1) nach Anspruch 1 oder 2, **dadurch gekennzeichnet, dass** die Steuerungseinrichtung (20) dazu ausgeführt und eingerichtet ist, die auszuführenden Einzelsequenzen (52a ... 52n) im Feldanfangmodus (39) und im Feldendemodus (40) automatisch in Abhängigkeit von der detektierten Fahrgeschwindigkeit und der zur Verfügung stehenden Druckmittelmenge anzupassen.

4. Erntemaschine (1) nach einem der vorangehenden Ansprüche, **dadurch gekennzeichnet, dass** die Steuerungseinrichtung (20) dazu ausgeführt und eingerichtet ist, zur Erkennung eines Wechsels zwischen dem Straßenfahrmodus und dem Feldfahrmodus die Betätigung und/oder den Betätigungszustand eines vom Straßenfahrschalter unabhängigen Schaltelementes (23) zu detektieren.

5. Erntemaschine (1) nach Anspruch 4, **dadurch gekennzeichnet, dass** mit dem Schaltelement (23) eine Visualisierungseinrichtung (56) verbunden ist, welche in Abhängigkeit vom Status der auszuführenden Sequenzmanagementfunktion (27) unterschiedliche Visualisierungszustände einnimmt.

6. Erntemaschine (1) nach einem der vorangehenden Ansprüche, **dadurch gekennzeichnet, dass** die Steuerungseinrichtung (20) dazu ausgeführt und eingerichtet ist, auszuführende Einzelsequenzen (52a ... 52n) des jeweiligen aktiven Modus (39, 40) der Sequenzmanagementfunktion (27) in Abhängigkeit vom Funktionsumfang der anzusteuernden Funktionseinrichtung (7) auszuwählen.

7. Erntemaschine (1) nach Anspruch 6, **dadurch gekennzeichnet, dass** die Steuerungseinrichtung (20) dazu ausgeführt und eingerichtet ist, den ausführbaren Funktionsumfang durch eine automatische Erkennung der anzusteuernden Funktionseinrichtung (7) und/oder durch eine manuelle Auswahl der anzusteuernden Funktionseinrichtung (7) durch einen Benutzer (26) zu bestimmen.

8. Erntemaschine (1) nach einem der vorangehenden Ansprüche, **dadurch gekennzeichnet, dass** in der Speichereinheit (22) editierbare Auswahllisten mit Einzelsequenzen (52a ... 52n) hinterlegt sind, die dem jeweiligen Modus der Sequenzmanagementfunktion (27), dem Feldanfangmodus (39) bzw. dem Feldendemodus (40), zugeordnet sind.

9. Erntemaschine (1) nach einem der vorangehenden Ansprüche, **dadurch gekennzeichnet, dass** die Steuerungseinrichtung (20) dazu ausgeführt und eingerichtet ist, die Ausführung von Einzelsequenzen (52a ... 52n) zumindest einer Funktionseinrichtung (7) in Abhängigkeit von der verfügbaren Druckmittelmenge im Hydrauliksystem (17) gleichzeitig oder sequentiell anzusteuern.

10. Erntemaschine (1) nach einem der vorangehenden Ansprüche, **dadurch gekennzeichnet, dass** die Steuerungseinrichtung (20) dazu ausgeführt und eingerichtet ist, in Abhängigkeit vom Überschreiten eines Grenzwertes für die detektierte Fahrgeschwindigkeit den jeweiligen auszuführenden Modus (39, 40) der Sequenzmanagementfunktion (27) automatisch auszuführen.

11. Erntemaschine (1) nach einem der vorangehenden Ansprüche, **dadurch gekennzeichnet, dass** der Feldanfangmodus (39) als Einzelsequenzen (52a ... 52n) ein Ausklappen eines klappbar ausgeführten Vorsatzgerätes (3), ein Anheben einer Überladevorrichtung (15), ein Anheben und Ausklappen einer klappbar ausgeführten Überladevorrichtung (15), ein Schwenken einer Überladeeinrichtung (15), einen Betrieb einer Differentialsperre in einem Automatikmodus umfasst.

12. Erntemaschine (1) nach einem der vorangehenden Ansprüche, **dadurch gekennzeichnet, dass** der Feldendemodus (40) als Einzelsequenzen (52a ... 52n) ein Einklappen eines klappbar ausgeführten Vorsatzgerätes (3), ein Überführen einer Überladevorrichtung (15) in eine Parkposition, ein Einklappen und Überführen einer klappbar ausgeführten Überladevorrichtung (15) in eine Parkposition, ein Spülen einer Siliermitteldosiervorrichtung (14) umfasst.

13. Erntemaschine (1) nach einem der vorangehenden Ansprüche, **dadurch gekennzeichnet, dass** die Steuerungseinrichtung (20) dazu ausgeführt und eingerichtet ist, einen Wechsel zwischen dem Feldanfangmodus (39) und dem Feldendemodus (40) anhand der vorangehenden Modusauswahl und der Zustandsrückmeldung der abzuarbeitenden Einzelsequenzen (52a ... 52n) des vorangehenden Modus (39, 40) vorzunehmen.

14. Erntemaschine (1) nach einem der Ansprüche 4 bis 13, **dadurch gekennzeichnet, dass** das Schaltelement (23) als ein Taster (25) ausgeführt ist, welcher in eine Bedienarmlehne (24) oder einen Multifunktionsgriff integriert ist, die oder der in einer Fahrerkabine (18) der Erntemaschine (1) angeordnet ist.

15. Erntemaschine (1) nach einem der vorangehenden Ansprüche, **dadurch gekennzeichnet, dass** die Steuerungseinrichtung (20) dazu ausgeführt und eingerichtet ist, eine Bedien- und Eingabeeinheit (19) anzusteuern, um verschiedene Stati der abzuarbeitenden Einzelsequenzen (52a ... 52n) zu visualisieren.

## Claims

1. A self-propelled agricultural harvesting machine (1), in particular a forage harvester (2), with a front attachment (3) for picking up harvested material (4) from a field (5), at least one working unit (6) for processing and/or conveying the harvested material (4) as well as a hydrostatic propulsion unit as functional devices (7), a hydraulic system (17) for supplying at least some of the functional devices (7) with a pressurizing medium, as well as a control device (20) which is configured to control the functional devices (7) of the harvesting machine (1) in accordance with at least one sequence management function (27) stored in a memory unit (22) of the control device (20) during a respective change between road travel mode and field travel mode, **characterized in that** the sequence management function (27) to be executed in the field travel mode is divided into a field start mode (39), which is to be executed when leaving a road in order to travel on the field (5), and a field end mode (40), which is to be executed when leaving the field (5), wherein the control device (20) is constructed and configured to make a decision, as a function of a detected driving speed and a detected quantity of hydraulic fluid which is available in the hydraulic system (17), regarding the automatic execution and/or the extent of the automatic execution of the respective sequence management function (27) comprising a plurality of individual sequences (52a ... 52n) to be executed in the field start mode (39) or field end mode (40).

2. The harvesting machine (1) according to claim 1, **characterized in that** the field start mode (39) and the field end mode (40) respectively comprise individual sequences (52a ... 52n) for the inverse control of the same functional device (7) and/or individual sequences (52a ... 52n ) for the control of different functional devices (7).

3. The harvesting machine (1) according to claim 1 or claim 2, **characterized in that** the control device (20) is constructed and configured to automatically adjust the individual sequences (52a ... 52n) to be executed in the field start mode (39) and in the field end mode (40) as a function of the detected driving speed and the quantity of hydraulic fluid which is available.

4. The harvesting machine (1) according to one of the preceding claims, **characterized in that** the control device (20) is constructed and configured to detect the actuation and/or the actuation state of a switch element (23) which is independent of the road travel switch in order to recognise a change between the road travel mode and the field travel mode.

5. The harvesting machine (1) according to claim 4, **characterized in that** a visualization device (56) is connected to the switch element (23) and takes up different visualization states as a function of the status of the sequence management function (27) to be executed.

6. The harvesting machine (1) according to one of the preceding claims, **characterized in that** the control device (20) is constructed and configured to select individual sequences (52a ... 52n) to be executed of the respective active mode (39, 40) of the sequence management function (27) as a function of the scope of functions of the functional device (7) to be controlled.

7. The harvesting machine (1) according to claim 6, **characterized in that** the control device (20) is constructed and configured to determine the scope of functions which can be executed by means of an automatic recognition of the functional device (7) to be controlled and/or by means of a manual selection, by a user (26), of the functional device (7) to be controlled.

8. The harvesting machine (1) according to one of the preceding claims, **characterized in that** editable selection lists with individual sequences (52a ... 52n) are stored in the storage unit (22) and are associated with the respective mode of the sequence management function (27), the field start mode (39) or the field end mode (40).

9. The harvesting machine (1) according to one of the preceding claims, **characterized in that** the control device (20) is constructed and configured to control the execution of individual sequences (52a ... 52n) of at least one functional device (7) simultaneously or sequentially as a function of the available quantity of pressurizing medium in the hydraulic system (17).

10. The harvesting machine (1) according to one of the preceding claims, **characterized in that** the control device (20) is constructed and configured to automatically execute the respective mode (39, 40) to be executed of the sequence management function (27) when a limiting value for the detected driving speed is exceeded.

11. The harvesting machine (1) according to one of the preceding claims, **characterized in that** the field start mode (39) comprises, as individual sequences (52a ... 52n), folding out of a front attachment (3) which can be folded, raising of an overhead transfer device (15), raising and unfolding of an overhead transfer device (15) which can be folded, pivoting of an overhead transfer device (15), operation of a differential lock in an automatic mode.

12. The harvesting machine (1) according to one of the preceding claims, **characterized in that** the field end mode (40) comprises, as individual sequences (52a ... 52n), folding up of a front attachment (3) which can be folded, a transfer of an overhead transfer device (15) into a parking position, folding up and transfer, into a parking position, of an overhead transfer device (15) which can be folded, washing of a silage additive dosing device (14).

13. The harvesting machine (1) according to one of the preceding claims, **characterized in that** the control device (20) is constructed and configured to carry out a change between the field start mode (39) and the field end mode (40) based on the preceding mode selection and the feedback regarding the state of the individual sequences (52a ... 52n) to be processed of the preceding mode (39, 40).

14. The harvesting machine (1) according to one of claims 4 to 13, **characterized in that** the switch element (23) is constructed as a push button (25) which is integrated into a control armrest (24) or a multifunctional grip, the control armrest or the multifunctional grip being disposed in a driver's cab (18) of the harvesting machine (1).

15. The harvesting machine (1) according to one of the preceding claims, **characterized in that** the control device (20) is constructed and configured to control an operating and input unit (19) in order to visualize different statuses of the individual sequences (52a ... 52n) to be processed.

## Revendications

1. Machine de récolte agricole (1) automotrice, en particulier récolteuse-hacheuse-chargeuse (2), comprenant une tête de récolte (3), destinée à ramasser des produits à récolter (4) dans un champ (5), au moins un organe de travail (6) pour le traitement et/ou le convoyage de la récolte (4), ainsi qu'une transmission hydrostatique, en tant que dispositifs fonctionnels (7), un système hydraulique (17) destiné à alimenter au moins certains des dispositifs fonctionnels (7) avec un fluide sous pression, ainsi qu'un dispositif de commande (20) qui est conçu pour activer les dispositifs fonctionnels (7) de la machine de récolte (1) conformément à au moins une fonction de gestion de séquence (27) enregistrée dans une unité de mémoire (22) du dispositif de commande (20), lors d'un changement respectif entre un mode de déplacement sur route et un mode de déplacement en champ, **caractérisée en ce que** la fonction de gestion de séquence (27) à exécuter en mode de déplacement en champ est divisée en un mode début de champ (39), qui doit être exécuté au moment de quitter une route pour un déplacement dans le champ (5), et un mode fin de champ (40) qui doit être exécuté au moment de quitter le champ (5), le dispositif de commande (20) étant conçu et agencé pour décider, en fonction d'une vitesse de déplacement détectée et d'une quantité de fluide sous pression détectée, disponible dans le système hydraulique (17), de l'exécution automatique et/ou de l'étendue de l'exécution automatique de la fonction de gestion de séquence (27) respective, comportant plusieurs séquences individuelles (52a ... 52n) à exécuter, en mode début de champ (39) ou en mode fin de champ (40).

2. Machine de récolte (1) selon la revendication 1, **caractérisée en ce que** le mode début de champ (39) et le mode fin de champ (40) comportent respectivement des séquences individuelles (52a ... 52n) pour l'activation inverse du même dispositif fonctionnel (7) et/ou des séquences individuelles (52a ... 52n) pour l'activation de dispositifs fonctionnels (7) différents.

3. Machine de récolte (1) selon la revendication 1 ou 2, **caractérisée en ce que** le dispositif de commande (20) est conçu et agencé pour adapter les séquences individuelles (52a ... 52n) à exécuter en mode début de champ (39) et en mode fin de champ (40), automatiquement en fonction de la vitesse de déplacement détectée et de la quantité de fluide sous pression disponible.

4. Machine de récolte (1) selon une des revendications précédentes, **caractérisée en ce que** le dispositif de commande (20) est conçu et agencé pour détecter l'actionnement et/ou l'état d'actionnement d'un élément de manœuvre (23) indépendant du commutateur de déplacement sur route, aux fins d'identifier un changement entre le mode de déplacement sur route et le mode de déplacement en champ.

5. Machine de récolte (1) selon la revendication 4, **caractérisée en ce qu'**est relié à l'élément de manœuvre (23), un dispositif de visualisation (56) qui adopte des états de visualisation différents, en fonction du statut de la fonction de gestion de séquence (27) à exécuter.

6. Machine de récolte (1) selon une des revendications précédentes, **caractérisée en ce que** le dispositif de commande (20) est conçu et agencé pour sélectionner des séquences individuelles (52a ... 52n) à exécuter du mode (39, 40) actif respectif de la fonction de gestion de séquence (27), suivant la gamme de fonctions du dispositif fonctionnel (7) devant être activé.

7. Machine de récolte (1) selon la revendication 6, **caractérisée en ce que** le dispositif de commande (20) est conçu et agencé pour déterminer la gamme de fonctions susceptible d'être exécutée, du fait d'une identification automatique du dispositif fonctionnel (7) à activer, et/ou du fait d'une sélection manuelle du dispositif fonctionnel (7) à activer, par un utilisateur (26).

8. Machine de récolte (1) selon une des revendications précédentes, **caractérisée en ce que** des listes de sélection éditables avec des séquences individuelles (52a ... 52n) sont enregistrées dans l'unité de mémoire (22) et sont associées au mode respectif de la fonction de gestion de séquence (27), au mode début de champ (39) ou au mode fin de champ (40).

9. Machine de récolte (1) selon une des revendications précédentes, **caractérisée en ce que** le dispositif de commande (20) est conçu et agencé pour activer, simultanément ou de manière séquentielle, l'exécution de séquences individuelles (52a ... 52n) d'au moins un dispositif fonctionnel (7), en fonction de la quantité de fluide sous pression disponible dans le système hydraulique (17).

10. Machine de récolte (1) selon une des revendications précédentes, **caractérisée en ce que** le dispositif de commande (20) est conçu et agencé pour exécuter automatiquement le mode (39, 40) respectif à exécuter de la fonction de gestion de séquence (27), en fonction du dépassement d'une valeur limite pour la vitesse de déplacement détectée.

11. Machine de récolte (1) selon une des revendications précédentes, **caractérisée en ce que** le mode début de champ (39) comprend comme séquences individuelles (52a ... 52n) un déploiement d'une tête de récolte (3) réalisée sous une forme rabattable, un levage d'un dispositif de transfert (15), un levage et un déploiement d'un dispositif de transfert (15) réalisé sous une forme rabattable, un pivotement d'un dispositif de transfert (15), un fonctionnement d'un verrou de différentiel dans un mode automatique.

12. Machine de récolte (1) selon une des revendications précédentes, **caractérisée en ce que** le mode fin de champ (40) comprend comme séquences individuelles (52a ... 52n) un rabattement d'une tête de récolte (3) réalisée sous une forme rabattable, un déplacement d'un dispositif de transfert (15) dans une position de rangement, un rabattement d'un dispositif de transfert (15) réalisé sous une forme rabattable et son déplacement dans une position de rangement, un rinçage d'un dispositif de dosage de produit d'ensilage (14).

13. Machine de récolte (1) selon une des revendications précédentes, **caractérisée en ce que** le dispositif de commande (20) est conçu et agencé pour effectuer un changement entre le mode début de champ (39) et le mode fin de champ (40), à l'aide de la sélection de mode qui précède, et du retour sur l'état des séquences individuelles (52a ... 52n) à exécuter du mode (39, 40) précédent.

14. Machine de récolte (1) selon une des revendications 4 à 13, **caractérisée en ce que** l'élément de manœuvre (23) est réalisé sous forme de bouton-poussoir (25) qui est intégré dans un accoudoir de commande (24) ou une manette multifonctions installé(e) dans la cabine de conduite (18) de la machine de récolte (1).

15. Machine de récolte (1) selon une des revendications précédentes, **caractérisée en ce que** le dispositif de commande (20) est conçu et agencé pour activer une unité de manœuvre et de saisie (19), aux fins de visualiser différents statuts des séquences individuelles (52a ... 52n) à exécuter.
